# EUROPEAN PATENT APPLICATION

(11) **EP 1 900 791 A1**
(43) Date of publication of application: **19.03.2008**
(21) Application number: 06731369.2
(22) Date of filing: 07.04.2006
(51) Int. Cl.: C09K 11/64

(54) **HIGH-INTENSITY STRESS LUMINESCENT MATERIAL CAPABLE OF ULTRAVIOLET EMISSION, PROCESS FOR PRODUCING THE SAME, AND USE THEREOF**

(30) Priority: 08.04.2005 JP 2005112781; 20.03.2006 JP 2006076495
(71) Applicant: National Institute of Advanced Industrial Science and Technology, Tokyo 100-8921 (JP)
(72) Inventor: XU, Chao-Nan, Saga 841-0052 (JP); YAMADA, Hiroshi, Saga 841-0052 (JP)
(74) Representative: Graf von Stosch, Andreas
(86) International application number: PCT/JP2006/307422
(87) International publication number: WO 2006/109704

(57) **Abstract**

The present invention provides (i) a luminant having a unique crystal structure so as to exhibit high luminosity and (ii) a manufacturing method thereof. Further, the present invention provides (I) a luminant which exhibits ultraviolet luminescence and (II) a manufacturing method thereof. The inventors developed a stress-stimulated luminescent material which exhibits high luminosity by using a compound having a structure obtained by inserting alkali metal ions and alkali earth metal ions into a base material structure constituted of polyhedral-structure molecules and partially substituting the alkali metal ions and alkali earth metal ions by rare earth metal ions, transition metal ions, group-III metal ions, or group-IV metal ions. Further, the inventors developed a stress-stimulated luminescent material which exhibits high-luminosity stress-stimulated ultraviolet luminescence by adding specific metal ions such as Ce as a luminescent center to the aforementioned stress-stimulated luminescent material.

## Description

### TECHNICAL FIELD

The present invention relates to a stress-stimulated luminescent material, a manufacturing method thereof, and usage thereof. Particularly, the present invention relates to (i) a high-luminosity stress-stimulated luminescent material emitting ultraviolet light, (ii) a manufacturing method thereof, and (iii) a usage thereof.

### BACKGROUND ART

Conventionally, such a phenomenon that visible light is emitted in response to various stimuli from the outside (external stimuli) has been known (such phenomenon is so-called "fluorescent phenomenon"). A material exhibiting the fluorescent phenomenon is referred to as a fluorescent material, and is used in various fields such as a lamp or a panel light, various types of displays such as a cathode ray tube or a plasma display panel, pigments, and the like.

Further, a large number of materials exhibiting the fluorescent phenomenon in response to external stimuli such as an ultraviolet ray, an electron ray, an X ray, a radiant ray, an electric field, and chemical reaction (i.e., luminescent materials) are known. Recently, the inventors of the present invention found a stress-stimulated luminescent material which emits light due to distortion caused by applying a mechanical stress such as a frictional force, a shearing force, an impulse, and vibration, and evaluation thereof and a utilization thereof have been developed.

Specifically, as such a stress-stimulated luminescent material and a method related thereto, the inventors of the present invention developed: (i) a stress-stimulated luminescent material having a spinel structure, a corundum structure, or a β alumina structure (see Patent Document 1); (2) a silicate stress-stimulated luminescent material (see Patent Documents 2 and 3); (3) a high-luminosity stress-stimulated luminescent material made of defect-controlled aluminate (see Patent Document 4); (4) a method in which a stress distribution is visualized and evaluated by applying a mechanical stress such as compression, tension, and twist, to a composite material containing an epoxy resin and a test piece coated with a film made of the composite material (see Patent Documents 4 and 5); (5) a high-luminosity mechanoluminescent material, allowing a wurtzite structure and a blende structure to coexist therein, which contains oxide, sulfide, selenide, and telluride, as main components (see Patent Document 6); and the like.

The stress-stimulated luminescent material can repetitively emit light semi-permanently with such luminosity that the emission can be confirmed by eyes. Further, by using these stress-stimulated luminescent materials, it is possible to measure a stress distribution in a structure including the stress-stimulated luminescent material.

Examples of the measurement of the stress distribution include: (1) a method in which a stress or a stress distribution is measured by using a stress-stimulated luminescent material; and (2) a system for measuring the stress distribution (see Patent Document 7); (3) a luminescent head for directly converting a mechanical external force into an optical signal so as to transmit the optical signal; and (4) a remote switching system using the same (see Patent Document 8); and the like.

However, a conventional stress-stimulated luminescent material emits intense light whose luminescence wavelength is 500 nm or more (luminescence wavelength ranging from green to red), but a luminescent material which emits intense light whose luminescence wavelength is shorter (luminescence wavelength ranging from blue to bluish-purple) has not been known.
[Patent Document 1]
Japanese Unexamined Patent Publication No. 119647/2000 (Tokukai 2000-119647)(Publication date: April 25, 2000)
[Patent Document 2]
Japanese Unexamined Patent Publication No. 313878/2000 (Tokukai 2000-313878)(Publication date: November 14, 2000)
[Patent Document 3]
Japanese Unexamined Patent Publication No. 165973/2003 (Tokukai 2003-165973)(Publication date: June 10, 2003)
[Patent Document 4]
Japanese Unexamined Patent Publication No. 49251/2001 (Tokukai 2001-49251)(Publication date: February 20, 2001)
[Patent Document 5]
Japanese Unexamined Patent Publication No. 292949/2003 (Tokukai 2003-292949)(Publication date: October 15, 2003)
[Patent Document 6]
Japanese Unexamined Patent Publication No. 43656/2004 (Tokukai 2004-43656)(Publication date: February 12, 2004)
[Patent Document 7]
Japanese Unexamined Patent Publication No. 215157/2001 (Tokukai 2001-215157)(Publication date: August 10, 2001)
[Patent Document 8]
Japanese Unexamined Patent Publication No. 77396/2004 (Tokukai 2004-77396)(Publication date: March 11, 2004)

### DISCLOSURE OF INVENTION

The present invention was made in view of the foregoing problems, and an object of the present invention is to provide (i) a high-luminosity stress-stimulated luminescent material using a substance having a unique crystal structure and (ii) a manufacturing method thereof. Further, another object of the present invention is to provide (I) a conventionally undeveloped high-luminosity stress-stimulated luminescent material which emits ultraviolet light and (II) a manufacturing method thereof.

The inventors of the present invention focused on a crystal structure of the stress-stimulated luminescent material and diligently studied the stress-stimulated luminescent material which emits intense light. As a result, they found that: if alkali metal ions and alkali earth metal ions are inserted into a gap between polyhedral-structure molecules, such as tetrahedral molecules, hexahedral molecules, and octahedral molecules, which constitute a minimum unit of the crystal structure (base material structure), a stress-stimulated luminescent material having a large void in its crystal structure and having a flexible structure obtained by flexibly coupling the polyhedral-structure molecules emits intense light. Further, the inventors found that: the stress-stimulated luminescent material whose framework structure (base material structure) is any one of first-dimensional, second-dimensional, and three-dimensional structures, and which includes specific metal ions as a luminescent center emits intense ultraviolet light. As a result, the inventors completed the present invention.

That is, a stress-stimulated luminescent material according to the present invention comprising a basic structure obtained by inserting alkali metal ions and/or alkali earth metal ions into a void of a base material structure made of a plurality of polyhedral-structure molecules, wherein the alkali metal ions and/or the alkali earth metal ions inserted into the void are partially substituted by at least one kind selected from a group made up of rare earth metal ions, transition metal ions, group-III metal ions, and group-IV metal ions.

It is preferable to arrange the stress-stimulated luminescent material so that the basic structure is self distorted and the polyhedral-structure molecules include at least one of tetrahedral AlO₄, tetrahedral SiO₄, tetrahedral PO₄, and tetrahedral BO₄.

Further, it is preferable to arrange the stress-stimulated luminescent material so that the basic structure has a triclinic structure belonging to a P-1 space group.

It is preferable to arrange the stress-stimulated luminescent material so that the triclinic structure belonging to the P-1 space group is an anorthite-like structure.

Further, it is preferable to arrange the stress-stimulated luminescent material so that the basic structure has a carbide structure belonging to a P-42₁m space group.

It is preferable to arrange the stress-stimulated luminescent material so that the carbide structure belonging to the P-42₁m space group is an akermanite-like structure.

Besides, it is preferable to arrange the stress-stimulated luminescent material so that the basic structure has a triclinic structure belonging to an R-3 space group.

It is preferable to arrange the stress-stimulated luminescent material so as to emit ultraviolet light.

It is preferable to arrange the stress-stimulated luminescent material so that the basic structure is represented by any one of the following expressions (1) to (6) :

MₓN₁₋ₓAl₂Si₂O₈ ... (1);

XₓY₁₋ₓAlSi₃O₈ ... (2);

(XₓM₁₋ₓ)(SiₓAl₁₋ₓ)AlSi₂O₈ ... (3);

XₓM_{y}Ca_{1-x-y}Al₂₋ₓSi₂₊ₓO₈ ... (4);

MₓN₂₋ₓMgSi₂O₇ ... (5);

and

MₓN₃₋ₓ(PO₄)₂ ... (6),

where each of M and N represents bivalent metal ions, and at least one kind thereof is Ca, Sr, Ba, Mg, or Mn, and each of X and Y represents monovalent metal ions, and at least one kind thereof is Li, Na, or K, and 0 ≤ x ≤ 0.8 and 0 ≤ y ≤ 0.8.

It is preferable to arrange the stress-stimulated luminescent material according to the present invention so that a plurality of alkali metal ions whose ion radiuses are different from each other or a plurality of alkali earth metal ions whose ion radiuses are different from each other are inserted into the void of the base material structure.

As a result, the stress-stimulated luminescent material is more greatly distorted (self distortion) than a case where a single kind of alkali metal or a single kind of alkali earth metal is included. The stress-stimulated luminescent material which is self distorted more easily emits light than a stress-stimulated luminescent material which is not self distorted. In this way, adjustment of the self distortion of the stress-stimulated luminescent material facilitates luminescence of the stress-stimulated luminescent material.

It is preferable to arrange the stress-stimulated luminescent material so that an amount of the rare earth metal, the transition metal, the group-III metal, and the group-IV metal is 0.1 mol % or more and 10 mol % or less.

The amount has great influence on luminescence of the stress-stimulated luminescent material. By setting the amount within the aforementioned range, it is possible to realize efficient luminescence of the stress-stimulated luminescent material.

Further, it is preferable to arrange the stress-stimulated luminescent material so that the rare earth metal ions are at least one kind selected from a group made up of Eu, Dy, La, Gd, Ce, Sm, Y, Nd, Tb, Pr, Er, Tm, Yb, Sc, Pm, Ho, and Lu, and the transition metal ions are at least one kind selected from a group made up of Cr, Mn, Fe, Sb, Ti, Zr, V, Co, Ni, Cu, Zn, Nb, Mo, Ta, and W, and the group-III metal ions are at least one kind selected from a group made up of Al, Ga, In, and T1, and the group-IV metal ions are at least one kind selected from a group made up of Ge, Sn, and Pb.

Further, it is preferable to arrange the stress-stimulated luminescent material so that the rare earth metal ions are Ce ions, and the group-III metal ions are Ti ions, and the group-IV metal ions are Sn ions or Pb ions.

It is preferable to arrange the stress-stimulated luminescent material according to the present invention so that at least Ce ions are inserted into the void. As a result, the Ce ions or a mixture of the Ce ions and other ions serves as a luminescent center, so that the stress-stimulated luminescent material can emit ultraviolet light.

Further, it is preferable to arrange the stress-stimulated luminescent material according to the present invention so that the stress-stimulated luminescent material is represented by Ca_{1-y}Ce_{y}Al₂Si₂O₈ where 0.001 ≤ y ≤ 0.1.

Further, it is preferable to arrange the stress-stimulated luminescent material according to the present invention so that the stress-stimulated luminescent material is represented by Sr_{1-y}Ce_{y}(PO₄)₂ where 0.001 ≤ y ≤ 0.1.

Further, a method according to the present invention for manufacturing a stress-stimulated luminescent material comprising the steps of: forming a basic structure by inserting alkali metal ions and alkali earth metal ions into a void of a base material structure made of a plurality of polyhedral-structure molecules; and partially substituting the alkali metal ions and/or the alkali earth metal ions inserted into the void by at least one kind selected from a group made up of rare earth metal ions, transition metal ions, group-III metal ions, and group-IV metal ions.

Further, it is preferable to arrange the method so as to comprise the step of inserting a plurality of alkali metal ions whose ion radiuses are different from each other or a plurality of alkali earth metal ions whose ion radiuses are different from each other into the void of the base material structure.

A stress-stimulated luminant according to the present invention comprising the stress-stimulated luminescent material described above.

Further, it is preferable to arrange the aforementioned luminant so as to be obtained by mixing the stress-stimulated luminescent material with a polymer material.

A usage of the stress-stimulated luminescent material according to the present invention is such that the stress-stimulated luminescent material is dispersed in a first-dimensional manner.

Further, a usage of the stress-stimulated luminescent material according to the present invention is such that the stress-stimulated luminescent material is distributed in a second-dimensional manner.

Further, a usage of the stress-stimulated luminescent material according to the present invention is such that the stress-stimulated luminescent material is distributed in a three-dimensional manner.

As described above, the stress-stimulated luminescent material according to the present invention includes a basic structure obtained by inserting alkali metal ions and alkali earth metal ions into a void of a base material structure made of a plurality of polyhedral-structure molecules. Therefore, it is possible to exhibit such an effect that intense light can be emitted. Further, the alkali metal ions and/or the alkali earth metal ions inserted into the void are partially substituted by at least one kind selected from a group made up of rare earth metal ions, transition metal ions, group-III metal ions, and group-IV metal ions. Therefore, it is possible to exhibit such an effect that intense ultraviolet light can be emitted.

### BRIEF DESCRIPTION OF DRAWINGS

Fig. 1 is a schematic illustrating a crystal structure of CaAl₂Si₂O₈.
Fig. 2(a) is a schematic illustrating a crystal structure of Sr₂MgSi₂O₇.
Fig. 2(b) is a schematic illustrating the crystal structure of Sr₂MgSi₂O₇ from a view point different from Fig. 2(a).
Fig. 3 is a schematic illustrating a crystal structure of Ba₃(PO₄)₂.
Fig. 4 is a schematic illustrating a crystal structure of Ca_{0.2}Sr_{0.8}Al₂Si₂O₈.
Fig. 5 is a schematic illustrating powder X-ray diffraction patterns of Ca_{0.999}Ce_{0.005}Tb_{0.005}Al₂Si₂O₈.
Fig. 6 is a schematic illustrating a luminescence spectrum of Ca_{0.999}Ce_{0.005}Tb_{0.005}Al₂Si₂O₈.
Fig. 7 is a graph illustrating how stress-stimulated luminescence of Ca_{0.999}Ce_{0.005}Tb_{0.005}Al₂Si₂O₈ changes with time passage.
Fig. 8 is a graph illustrating measurement results of a stress-stimulated luminescent material of Example 3 in view of PL luminosity and ML luminosity.
Fig. 9 is a graph illustrating measurement results of a stress-stimulated luminescent material of Example 4 in view of PL luminosity and ML luminosity.
Fig. 10 is a graph illustrating measurement results of a stress-stimulated luminescent material of Example 5 in view of PL luminosity and ML luminosity.
Fig. 11 is a graph illustrating how stress-stimulated luminescence of a stress-stimulated luminescent material (Sr_{2.985}Ce_{0.015}(PO₄)₂) of Example 6 changes with time passage.
Fig. 12 is a schematic illustrating results of crystal analysis carried out with respect to the stress-stimulated luminescent material (Sr_{2.985}Ce_{0.015}(PO₄)₂) of Example 6 by using an X ray.

### BEST MODE FOR CARRYING OUT THE INVENTION

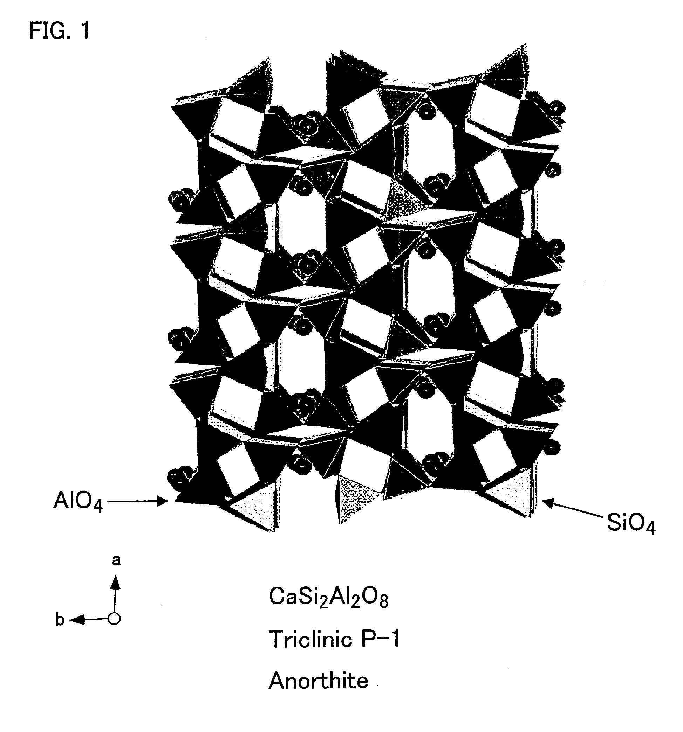

The following describes an embodiment of the present invention with reference to Fig. 1 to Fig. 4. Note that, the present invention is not limited to this. The following descriptions will further detail the present invention by explaining a stress-stimulated luminescent material according to the present invention, a manufacturing method thereof, and a usage of the present invention in this order.

### <1. Stress-stimulated luminescent material according to the present invention>

It is preferable to arrange a basic structure of a stress-stimulated luminescent material according to the present invention so that alkali metal ions and alkali earth metal ions are inserted into a void of a base material structure made of a plurality of polyhedral-structure molecules.

In the present specification, the "polyhedral-structure molecule" refers to a molecule whose polyhedral structure is formed by linking a central atom to another atom. That is, the polyhedron is virtual. For example, an SiO₄ molecule has a silicon atom (Si) in its center and has oxygen atoms (O) in its apexes so as to form a tetrahedral structure, and an AlO₄ molecule has an aluminum atom (Al) in its center and has oxygen atoms (O) in its apexes so as to form a tetrahedral structure. Other examples of the polyhedral-structure molecule include GaO₄, MgO₄, PO₄, BO₄, and the like.

Further, the "base material structure" is formed by combining molecules (polyhedral-structure molecules) each having a polyhedral structure (e.g., a tetrahedral structure, a hexahedral structure, an octahedral structure, and the like) as a minimum unit of a crystal so that these molecules are coupled in a first-dimensional, a second-dimensional, or a third-dimensional manner. The base material structure formed in this manner has a flexible structure having a large void (space) therein. That is, the base material structure is likely to be distorted in its void. In this way, distortion energy caused by distortion in the base material structure excites a luminescent center of the stress-stimulated luminescent material. The luminescent center in an excited state returns to a normal state, so that the stress-stimulated luminescent material emits light. Thus, the base material structure arranged in the foregoing manner allows the stress-stimulated luminescent material to emit intense light.

Specific examples of the base material structure include structures illustrated in Fig. 1 to Fig. 3 respectively.

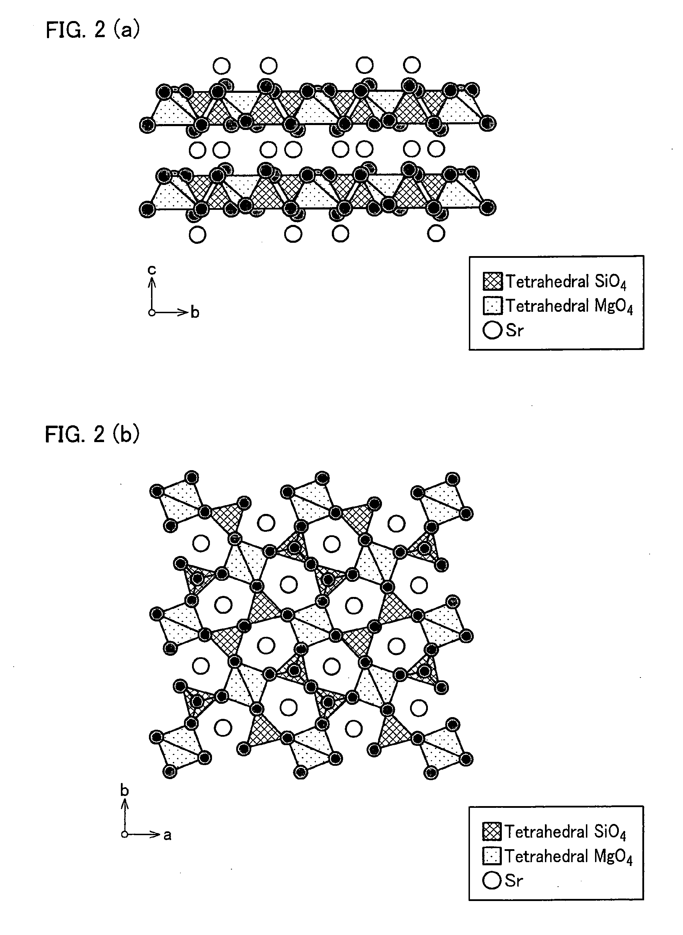

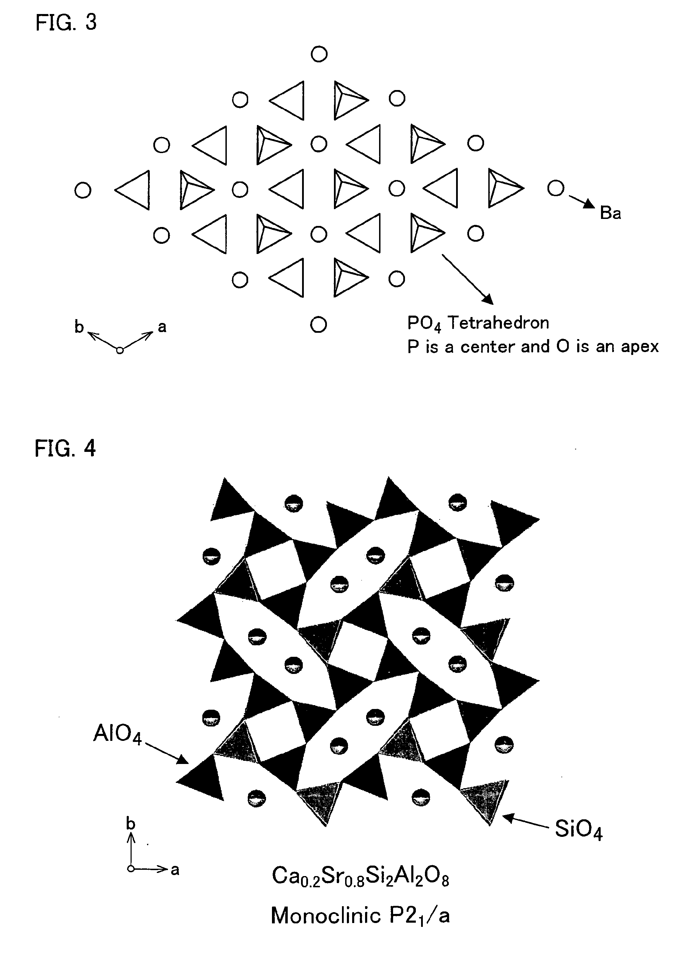

Fig. 1 illustrates a structure of CaAl₂Si₂O₈ in which Ca is inserted into a void of a base material structure (framework) constituted of tetrahedral-structure SiO₄ molecules and tetrahedral-structure AlO₄ molecules in a three-dimensional manner. As a result, the structure allows for self distortion. Each of Fig. 2(a) and Fig. 2(b) illustrates a structure of Sr₂MgSi₂O₇ in which Sr and Mg are inserted into a void of a base material structure (framework) constituted of SiO₄ molecules in a second-dimensional manner. Each of these structures allows for self distortion. Fig. 3 illustrates a structure of Ba₃(PO4)₂ in which PO₄ tetrahedrons and alkali earth metal ions (Ba) are alternately disposed. Each of the three exemplified structures allows for self distortion.

In the present specification, the "self distortion" refers to distortion generated at the time when a structure changes into another structure. If a temperature of the luminescent material is raised for example, the luminescent material changes into a favorably symmetric structure. Accordingly, the luminescent material is structurally changed by change of the temperature and pressure, so that the luminescent material changes into another phase. The "self distortion" is an index indicative of how much the favorably symmetric structure is distorted, and the "self distortion" refers to distortion of the luminescent material. Note that, distortion generated in the luminescent material by an external force is not regarded as the "self distortion". Each of these materials is characterized in that there is no symmetric center of the crystal.

In the present invention, the polyhedral-structure molecule constituting the base material structure is not particularly limited, but it is preferable that the polyhedral-structure molecule is a tetrahedral-structure molecule, a hexahedral-structure molecule, or an octahedral-structure molecule. Particularly, it is preferable that the molecules are AiO₄, PO₄, BO₄, and SiO₄. These tetrahedral-structure molecules are extremely hard, and a structure around the luminescent center inserted into the base material structure constituted of these molecules is highly flexible. Thus, when a stress is applied, the stress is concentrated onto the luminescent center of the flexible structure, so that the base material structure is likely to be distorted. Hence, as described above, the distortion energy causes the stress-stimulated luminescent material to easily emit light in response to the stress.

Further, the base material structure may be constituted of polyhedral-structure molecules of one kind or may be constituted of polyhedral-structure molecules of plural kinds.

The basic structure is formed by inserting alkali metal ions and alkali earth metal ions into a void of the base material structure. Specifically, the formation of the basic structure is realized by aluminosilicate, phosphate, borate, silicate, or aluminate.

In the present specification, "aluminosilicate", "phosphate", "borate", "silicate", and "aluminate" respectively refer to alkali metal salt or alkali earth metal salt of phosphoric acid, alkali metal salt or alkali earth metal salt of boric acid, alkali metal salt or alkali earth metal salt of silicic acid, and alkali metal salt or alkali earth metal salt of aluminate.

The alkali metal ions and the alkali earth metal ions are not particularly limited. Examples of the alkali metal ions include ions such as Li, Na, K, Rb, and Cs. Further, examples of the alkali earth metal ions include ions such as Ca, Mg, Ba, and Sr.

Further, the alkali metal ions inserted into the void of the base material structure may be of one kind or of two or more kinds, and the alkali earth metal ions inserted into the void of the base material structure may be of one kind or of two or more kinds. Moreover, in case where a plural kinds of alkali metal ions and plural kinds of alkali earth metal ions are inserted, it is preferable that the plural kinds of alkali metal ions and/or the plural kinds of alkali earth metal ions have ion radiuses which are different from each other. As a result, the self distortion of the stress-stimulated luminescent material changes, which allows the stress-stimulated luminescent material to more easily emit light.

Further, the alkali metal ions or the alkali earth metal ions inserted into the void of the base material structure may be partially substituted by other ions. The substitution facilitates distortion as long as the crystal structure can be kept, so that it is easier to exhibit stress-stimulated luminescence.

In the present invention, it is preferable that the basic structure has a triclinic structure belonging to a P-1 space group, a carbide structure belonging to a P-42₁m space group, or a triclinic structure belonging to an R-3 space group. An example of the triclinic structure belonging to the P-1 space group is an anorthite-like structure. Note that, as described later, the "anorthite-like structure" refers not only to an anorthite structure but also to a structure similar to the anorthite structure (i.e., a similar composition) as long as the alkali metal ions and the alkali earth metal ions can be inserted into the void of the three-dimensional structure. Further, an example of the carbide structure belonging to the P-42₁m space group is an akermanite-like structure. Note that, the "akermanite-like structure" refers not only to an akermanite structure but also to a structure similar to the akermanite structure (i.e., a similar composition) as long as the alkali metal ions and the alkali earth metal ions can be inserted into the void of the three-dimensional structure.

Further, it is preferable that the basic structure is aluminosilicate. Aluminosilicate can be obtained by partially substituting polysilicate ions by aluminum. In aluminosilicate, the alkali metal ions or the alkali earth metal ions are inserted into a void (space) of its crystal structure.

An example of aluminosilicate is feldspar. The feldspar is aluminosilicate whose ideal chemical composition is Z(Si, Al)₄O₈ where Z represents alkali metal or alkali earth metal, and 0 < Al/Si≤ 1. The feldspar is generally a solid solution containing, as end members, alibite NaAlSi₃O₈, anorthite CaAl₂SiO₈, and potassium feldspar KAlSi₃O₈. That is, the feldspar structure is a mixture of a plurality of aluminosilicates each having an anorthite-like structure.

In the feldspar, each of the tetrahedral-structure SiO₄ molecule and the tetrahedral-structure AlO₄ molecule is a minimum unit, and these molecules share all apexes so as to be coupled to one another, thereby forming a three-dimensional structure. Further, in the feldspar, Z (alkali metal or alkali earth metal) is inserted into a void (space) of the three-dimensional structure.

For example, as illustrated in Fig. 4, the anorthite structure has AlO₄ and SiO₄ as basic units of the basic structure, and these molecules share apexes thereof so as to have a large void. Further, the molecules are flexibly coupled to one another, and the structure can be freely distorted depending on sizes of alkali metal ions or alkali earth metal ions inserted into the void. Thus, it is possible to favorably use aluminosilicate such as feldspar as the basic structure of the stress-stimulated luminescent material. Note that, if the basic structure is aluminosilicate, it is preferable that the base material structure is AlSi₃O₈-(in case of alkali metal salt) or Al₂Si₂O₈²⁻ (in case of alkali earth metal salt).

Other examples of the basic structure include "anorthite-like structure", "feldspar-like structure", "feldspathoid structure", and the like.

In the present specification, as described above, the "anorthite-like structure" refers not only to anorthite but also to a structure similar to the anorthite structure (i.e., a similar composition) as long as the alkali metal ions and the alkali earth metal ions can be inserted into the void of the base material structure constituting the three-dimensional structure of the luminant. Likewise, the "feldspar-like structure" refers not only to a feldspar structure but also to a structure similar to the anorthite structure (i.e., a similar composition) as long as the alkali metal ions and the alkali earth metal ions can be inserted into the void of the base material structure constituting the three-dimensional structure of the luminant.

Further, as in the "feldspar", the "feldspathoid" is aluminosilicate, and all apexes of AlO₄ and SiO₄ are shared so that AlO₄ and SiO₄ are coupled to one another so as to form a three-dimensional structure. Examples of the feldspathoid include: leucite KAlSi₂O₆; nepheline NaAlSiO₄; a composition whose crystal structure is similar to crystal structures of these compositions; and the like.

Further, as to the molecular formula of the stress-stimulated luminescent material found in the present invention and emitting intense light in response to a stress, the inventors of the present invention also confirmed that a luminescent material having the same composition and a different structure does not emit light in response to a stress.

For example, Ishihara et al reported that BaAl₂Si₂O₈ exhibits fract-luminescence (Fract-Luminescence of rare earth element-Doped hexacelsian (BaAl₂Si₂O₈), Jpn. J Appl. Phys. (1997) Volume 36 6B, ppL781-783, and Full Color triboluminescence of rare-earth-doped hexacelsian (BaAl₂Si₂O₈) Solid State Commun (1998) Volume 107 pp.763-767). According to the foregoing documents, BaAl₂Si₂O₈ is manufactured by a completely different manufacturing method, and a resultant structure has a hexacelsian-layer structure as specified in titles of the documents. This is completely different from the crystal structure of the present invention. BaAl₂Si₂O₈ having the hexacelsian-layer structure exhibits high-luminosity fract-luminescence but does not exhibit luminescence caused by distortion energy based on a mechanical external force, i.e., does not exhibit "stress-stimulated luminescence" of the present invention. This is because a complete difference between luminescent principles of the both results in a difference between base material structures of favorable luminescent materials.

Likewise, the inventors specified a crystal property of silicate also as to silicate luminants described in the applications previously filed (see Patent Documents 2 and 3). As a result, none of the crystals have the base material structure proposed by the present invention. That is, the silicate luminant described in each of Patent Documents 2 and 3, and friction luminescence or instantaneous-compression luminescence of a disc pellet is utilized to measure its luminosity so as to give evaluation thereof. In this manner, the fract-luminescence greatly contributes to luminescence of the luminant.

While, luminescence derived from deformation is based on a principle completely different from the fract-luminescence (for example, see Hybrid Stress-Stimulated Luminescent Material, Ceramics, 39(2), pages 130-133, 2004), so that a luminescent material exhibiting high-luminosity fract-luminescence does not necessarily exhibit deformation luminescence. The inventors confirmed that the previously proposed luminescent material exhibiting high-luminosity fract-luminescence hardly exhibits luminescence bade on deformation.

It is preferable to arrange the stress-stimulated luminescent material according to the present invention so that the alkali metal ions and/or the alkali earth metal ions inserted into the base material structure are partially substituted by at least one kind selected from a group made up of rare earth metal ions, transition metal ions, group-III metal ions, and group-IV metal ions.

The rare earth metal ions, the transition metal ions, the group-III metal ions, and the group-IV metal ions are not particularly limited, but it is preferable to use ions serving as a luminescent center. Examples of the rare earth metal ions include ions such as europium (Eu), dysprosium (Dy), lanthanum (La), gadolinium (Gd), cerium (Ce), samarium (Sm), yttrium (Y), neodymium (Nd), terbium (Tb), praseodymium (Pr), erbium (Er), thulium (Tm), ytterbium (Yb), scandium (Sc), promethium (Pm), holmium (Ho), lutetium (Lu), and the like.

Further, examples of the transition metal ions include ions such as chromium (Cr), manganese (Mn), ferrum (Fe), stibium (Sb), titanium (Ti), zirconium (Zr), vanadium (V), cobalt (Co), nickel (Ni), Copper (Cu), zinc (Zn), niobium (Nb), molybdenum (Mo), tantalum (Ta), tungsten (W), and the like.

Further, examples of the group-III metal ions include ions such as aluminum (Al), gallium (Ga), indium (In), thallium (T1), and the like.

Besides, examples of the group-IV metal ions include ions such as germanium (Ge), stannum (Sn), and lead (Pb), and the like.

Note that, at least one kind of ions is selected from the corresponding examples as the rare earth metal ions, at least one kind of ions is selected from the corresponding examples as the transition metal ions, at least one kind of ions is selected from the corresponding examples as the group-III metal ions, and at least one kind of ions is selected from the corresponding examples as the group-IV metal ions.

In the luminescent material, an amount of the rare earth metal ions and the transition metal ions (amount of the luminescent center) has great influence on the luminescence. In the present invention, the amount is not particularly limited as long as it is possible to keep the three-dimensional structure of the base material structure. Specifically, the amount is preferably 0.1 mol % or more and 20 mol % or less, more preferably 0.2 mol % or more and 10 mol % or less, particularly preferably 0.5 mol % or more and 5 mol % or less. Note that, in case where the amount is less than 0.1 mol %, it is impossible to efficiently emit light. In case where the amount exceeds 20 mol %, the base material structure becomes disarranged, so that light is less efficiently emitted.

Further, in the luminescent material, its luminescent color changes depending on a type of the luminescent center. In other words, the present invention allows the luminescent color to change depending on selected kinds of the rare earth metal ions, the transition metal ions, the group-III metal ions, and the group-IV metal ions. A conventional stress-stimulated luminescent material can emit intense light at a luminescence wavelength of 500 nm or more (wavelength of green to red light) but cannot emit intense light at a shorter luminescence wavelength, i.e., at a wavelength of blue to bluish-purple light. However, in the stress-stimulated luminescent material according to the present invention, for example, if Ce ions are selected as the rare earth metal ions, it is possible to realize a stress-stimulated luminescent material which emits intense ultraviolet light (high-luminosity stress-stimulated luminescent material).

Thus, it is preferable to arrange the stress-stimulated luminescent material according to the present invention so that at least Ce ions are inserted into the void of the base material structure. That is, it is preferable to use Ce ions or a mixture thereof as the luminescent center of the stress-stimulated luminescent material. As a result, it is possible to provide a stress-stimulated luminescent material which favorably exhibits ultraviolet luminescence.

Note that, in the present specification, the "ultraviolet light" is a radiant ray whose wavelength ranges from 200 to 400 nm.

As described above, the stress-stimulated luminescent material according to the present invention allows the crystal structure (void) of the base material structure to be distorted, thereby emitting light. The stress-stimulated luminescent material allows a mechanical external force to distort the base material structure having the three-dimensional structure, thereby emitting intense light.

In the present specification, the "stress-stimulated luminescence" means a state in which deformation caused by a mechanical external force such as a frictional force, a shearing force, a pressure, and a tension allows the luminescent material to emit light.

The crystal structure of the base material structure allows not only the mechanical external force but also various kinds of energy such as an electric field to distort the base material structure. Thus, the stress-stimulated luminescent material according to the present invention may be made to emit light in accordance with a luminescent mechanism other than the stress-stimulated luminescence.

Further, in a field of a luminescent material, it seems to be more difficult to manufacture the stress-stimulated luminescent material than other luminescent materials (e.g., an electric field luminescent material, and the like). For example, if a mechanical external force is applied to the electric field luminescent material without applying an electric field, the electric field luminescent material does not emit light. While, it was verified that the stress-stimulated luminescent material can emit light based on a luminescent mechanism other than the stress-stimulated luminescence. For example, if the stress-stimulated luminescent material exhibits stress-stimulated luminescence, the stress-stimulated luminescent material exhibits also other luminescence (electric field luminescence and the like). Thus, the luminescent mechanism of the stress-stimulated luminescent material of the present invention is not particularly limited as long as it exhibits at least the stress-stimulated luminescence, and the stress-stimulated luminescent material can emit light also on the basis of a luminescent mechanism other than the stress-stimulated luminescence.

It is preferable that the basic structure of the stress-stimulated luminescent material according to the present invention is represented by any one of the following expressions (1) to (6):

MₓN₁₋ₓAl₂Si₂O₈ ... (1);

XₓY₁₋ₓAlSi₃O₈ ... (2);

(XₓM₁₋ₓ)(SiₓAl₁₋ₓ)AlSi₂O₈ ... (3);

XₓM_{y}Ca_{1-x-y}Al₂₋ₓSi₂₊ₓO₈ ... (4);

MₓN₂₋ₓMgSi₂O₇ ... (5);

and

MₓN₃₋ₓ(PO₄)₂ ... (6),

where each of M and N represents bivalent metal ions, and at least one kind thereof is Ca, Sr, Ba, Mg, or Mn, and each of X and Y represents monovalent metal ions, and at least one kind thereof is Li, Na, or K, and 0 ≤ x ≤ 0.8 and 0 ≤ y ≤ 0.8.

Specifically, as a stress-stimulated luminescent material exhibiting particularly high-luminosity ultraviolet luminescence, it is preferable to use a luminescent material made of aluminosilicate containing an alkali metal oxide or an alkali earth metal oxide, an aluminum oxide, and a silicon oxide, wherein alkali metal ions or alkali earth metal ions are partially substituted by another monovalent metal ions or bivalent metal ions, further, substituted by one or more kinds of transition metal ions or rare earth metal ions, while keeping a feldspar structure, preferably, an anorthite structure.

Further, as the stress-stimulated luminescent material according to the present invention for exhibiting the ultraviolet luminescence, it is preferable to use a stress-stimulated luminescent material represented by the following expression (7),

M_{1-x-y}NₓQ_{y}Al₂Si₂O₈ ... (7)

where each of M and N represents Ca, Sr, Mg, or Ba in an anorthite structure and represents Li, Na, or K in a feldspar structure, and Q represents rare earth metal ions, transition metal ions, group-III metal ions, or group-IV metal ions, and 0 ≤ x ≤ 0.8 and 0.01 ≤ y ≤ 0.1.

Further, it is preferable to arrange the stress-stimulated luminescent material so that Ca ions are selected as the alkali earth metal ions and a Ca site is partially substituted by Ce ions as the rare earth metal ions.

That is, it is more preferable that the stress-stimulated luminescent material is represented by the following expression (8),

Ca_{1-y}Q_{y}Al₂Si₂O₈ ... (8)

where Q represents Ce or other luminescent center ions, and y satisfies 0.001 ≤ y ≤ 0.1.

Further, the expression (8) can be represented also as Ca₁₋ₘCeₘAl₂Si₂O₈ where m satisfies 0.001 ≤ m ≤ 0.1.

Further, it is preferable to arrange the stress-stimulated luminescent material so that Sr ions are selected as the alkali earth metal ions, and an Sr site is partially substituted by Ce ions as the rare earth metal ions.

That is, it is more preferable that the stress-stimulated luminescent material is represented by the following expression (9),

Sr_{1-y}Q_{y}(PO₄)₂ ... (9)

where Q represents Ce or other luminescent center ions, and y satisfies 0.001 ≤ y ≤ 0.1.

Further, the expression (9) can be represented also as Sr₁₋ₘCeₘ(PO₄)₂ where m satisfies 0.001 ≤ m ≤ 0.1.

Note that, the "luminescent center ions" herein refers to the rare earth metal ions, the transition metal ions, the group-III metal ions, or the group-IV metal ions.

### <3. Method according to the present invention for manufacturing a stress-stimulated luminescent material>

The stress-stimulated luminescent material can be manufactured by weighing constitutive materials thereof so that a composition of the stress-stimulated luminescent material is realized and by sintering the weighed constitutive materials. In the method according to the present invention for manufacturing the stress-stimulated luminescent material, it should be emphasized that the sintering is extremely important. Particularly, if temperature is rapidly dropped at the time of the sintering, it is difficult to obtain a predetermined crystal property, so that it is particularly preferable to slowly (gradually) drop the temperature. For example, as in the below-described Examples, the sintering temperature can be gradually raised and dropped by 2°C per minute. If the resultant is non-crystal (glass), it is impossible to keep the base material structure of the present invention, so that the non-crystal resultant has the same composition as the foregoing composition but has a different structure. This does not allow the stress-stimulated luminescent material to emit light in response to a stress.

However, the sintering temperature in manufacturing the stress-stimulated luminescent material is not particularly limited as long as it is possible to form a predetermined base material structure. Further, it is preferable to set the sintering temperature in accordance with a composition of the stress-stimulated luminescent material. That is, in the present invention, it should be emphasized that the stress-stimulated luminescence is based on formation of the base material structure in the stress-stimulated luminescent material of the present invention.

In the below-described Examples for instance, the stress-stimulated luminescent material cannot be obtained at 1000°C, but the stress-stimulated luminescent material can be obtained at 1200°C. In other words, sintering carried out at 1200°C or higher temperature allows for formation of the base material structure of the stress-stimulated luminescent material, thereby manufacturing the stress-stimulated luminescent material having the base material structure.

The constitutive materials for the stress-stimulated luminescent material according to the present invention are not particularly limited as long as each of the constitutive materials becomes an oxide by being sintered. For example, the constitutive materials are weighed and sintered so as to form an alkali metal oxide or an alkali earth metal, an aluminum oxide, a silicon oxide, and a rare earth metal oxide and/or a transition metal oxide in accordance with the composition of aluminosilicate as described above, thereby manufacturing the luminescent material.

As the constitutive materials, it is possible to use an inorganic or organic compound salt of the alkali metal or the alkali earth metal. Further, it is possible to use an inorganic or organic compound salt of the rare earth metal, the transition metal, the group-III metal, or the group-IV metal.

Examples of the inorganic compound salt include carbonate, oxide, halide (e.g., chloride), hydroxide, hydrosulfate, nitrate, and the like. Further, examples of the organic compound salt include acetate, alcoholate, and the like. Further, as a material for the aluminum oxide, it is possible to use Al₂O₃, and as a material for the silicon oxide, it is possible to use SiO₂.

Further, in manufacturing the stress-stimulated luminescent material, it is possible to use boric acid and a flux agent such as ammonium chloride.

Further, amounts of the constitutive materials for the stress-stimulated luminescent material are set so as to correspond to a ratio of constitutive atoms in accordance with the composition of the stress-stimulated luminescent material to be manufactured. In order to facilitate distortion of the base material structure, it is advantageous to form a lattice defect of the alkali ions or the alkali earth ions. Thus, it is preferable to decrease a composition of the alkali metal or the alkali earth metal within a range from 0.1 mol % to 10 mol % with respect to a stoicheiometric composition.

### <4. Usage of the stress-stimulated luminescent material according to the present invention>

The stress-stimulated luminescent material according to the present invention exhibits conventionally unachievable high-luminosity ultraviolet luminescence. Thus, a usage of the present invention is not particularly limited, and the stress-stimulated luminescent material can be widely applicable not only to a field using an ultraviolet ray but also to other various fields.

First, the stress-stimulated luminescent material can be used as fine particles for instance. That is, the stress-stimulated luminescent material can be used in a first-dimensional dispersion system. Note that, in the present specification, the "first-dimensional dispersion system" refers to such a phenomenon that fine particles of a certain substance are dispersed in other even substance. "To carry out dispersion in a first-dimensional manner" refers to dispersion of fine particles of a certain substance (e.g., stress-stimulated luminescent fine particles whose particle diameter ranges from few nanometers to 100 µm in the present invention) into other even substance.

An example of a method in which the stress-stimulated luminescent material according to the present invention is dispersed in the first-dimensional manner so as to utilize the stress-stimulated luminescent material is a method in which: stress-stimulated luminescent fine particles made of the stress-stimulated luminescent material are dispersed in a target system, and an ultraviolet ray is generated by a mechanical external force. The thus generated ultraviolet ray physically and chemically acts on a target which is in contact with or in a vicinity of the stress-stimulated luminescent fine particles.

Further, the stress-stimulated luminescent material can be used so that the target is coated therewith. That is, the stress-stimulated luminescent material can be used with it dispersed in a second-dimensional manner. For example, a surface of the target is coated with the luminescent fine particles, and a mechanical external force is applied so as to generate an ultraviolet ray. The ultraviolet ray physically and chemically acts on the target which is in contact with the stress-stimulated luminescent fine particles.

Further, the stress-stimulated luminescent material can be used so that a three-dimensional network structure is coated with the target. That is, the stress-stimulated luminescent material can be used with it dispersed in a three-dimensional manner.

Further, an example of other usage is as follows. An even material containing the stress-stimulated luminescent particles is formed into a specific shape so as to be used as a stress-stimulated luminant (stress-stimulated luminescent structure) which exhibits ultraviolet luminescence.

The ultraviolet ray has a short wavelength, so that its energy is high. Thus, energy of the ultraviolet ray emitted from the ultraviolet luminescent material can be used as excitation light. For example, a composite material is formed by mixing a stress-stimulated luminescent material which emits ultraviolet light with a luminescent material which emits light different from blue light, e.g., red, yellow, or green light, and which emits light in response to ultraviolet light and does not emit light in response to a stress. When a stress is applied to the composite material, only the ultraviolet luminescent material emits light. Further, luminescence of the ultraviolet luminescent material allows its ultraviolet ray energy to be used as excitation energy for exciting the luminescent material which emits visible light. In this way, luminants of all colors ranging from blue to red can emit light. As a result, it is possible to change a color of light emitted by the composite material.

Further, the ultraviolet luminescence has high energy, so that it is easy to detect the energy with a detector. Thus, it is possible to easily detect luminosity of the luminescent material. Further, an ultraviolet ray, particularly light whose wavelength is about 400 nm, is less emitted from a lighting equipment such as a fluorescent light, which results in such an advantage that there is little interference of the lighting circumstance in measuring the emitted light.

In response to a mechanical external force such as a frictional force, a shearing force, an impulse, vibration, a wind force, an ultrasonic wave, and the like, the luminescent material according to the present invention emits light. The luminosity depends on a characteristic of a mechanical external force serving as an excitation source, but it is general that a greater mechanical force exerted to the luminescent material and greater change of the mechanical force are likely to result in higher luminosity. Thus, it is possible to find out the mechanical force exerted to the luminescent material by measuring the luminosity of the luminescent material. As a result, it is possible to detect a state of the stress exerted to the luminescent material without contacting the luminescent material, so that it is also possible to visualize the state of the stress. Thus, the stress-stimulated luminescent material of the present invention is expected to be widely applicable not only to a stress detector but also to other fields.

A coating film made of the stress-stimulated luminescent material according to the present invention is provided on a surface of a heat-resistance base material so as to form a laminate material. The coating film is obtained by applying a compound which allows for formation of a predetermined base material structure, e.g., by applying a coating solution prepared by dissolving nitrate, halide, or alkoxy compound in a solvent, to a surface of a heat-resistance base material and by subsequently sintering the resultant. The heat-resistance base material is not particularly limited, but examples of a material thereof include: heat-resistance glass such as quartz, silicon, graphite, quartz glass, and vycor glass; ceramics such as alumina, silicon nitride, silicon carbide, and molybdenum disilicide; heat-resistance steel such as stainless steel; heat-resistance metal or heat-resistance alloy such as nickel, chromium, titanium, and molybdenum; cermet; cement; concrete; and the like.

The stress-stimulated luminescent material according to the present invention can be used also as a composite material made of the stress-stimulated luminescent material and other inorganic material or organic material. The composite material includes the stress-stimulated luminescent material, so that the composite material emits light when a mechanical external force causes the composite material to be distorted. For example, an arbitrary ratio of the stress-stimulated luminescent material is mixed and dispersed in a resin or an organic material such as plastic, thereby forming the composite material. If a mechanical external force is applied to the composite material, the stress-stimulated luminescent material included in the composite material is distorted. The distortion results in excitation energy, so that the composite material emits light.

The stress-stimulated luminescent material according to the present invention can be used with it applied to a surface of other material. In other words, the stress-stimulated luminescent material can be used under such condition that a layer including the stress-stimulated luminescent material (i.e., a stress-stimulated luminescent layer) is formed on a surface of other material. As a result, when a mechanical external force is applied to the material including the stress-stimulated luminescent layer, the stress-stimulated luminescent layer is deformed, so that the stress-stimulated luminescent layer emits light. In this way, the stress-stimulated luminescent material is used with formation of the stress-stimulated luminescent layer, so that it is possible to realize large-area luminescence with a small amount of the stress-stimulated luminescent material.

The stress-stimulated luminescent material according to the present invention can be used also as a light storage material or a fluorescent material.

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### [Examples]

The following Examples will more specifically describe the present invention, but the present invention is not limited to the Examples and may be altered, modified, or changed by a skilled person within the scope of the claims. Note that, the composite material including the stress-stimulated luminescent material in the following Examples was prepared as follows.

### [Manufacturing method of the composite material]

The composite material including the stress-stimulated luminescent material was obtained by kneading inorganic stress-stimulated luminescent material powder and organic polymer. For example, when the organic polymer was an epoxy resin, the inorganic stress-stimulated luminescent material powder and the epoxy resin were kneaded at a weight ratio of 1 : 1, and then the resultant was processed into a composite material test piece of 20 x 5 x 45 mm.

### [Example 1]

The present Example describes a case where Ca was used as the alkali earth metal, AlO₄ was used as one kind of polyhedral-structure molecules constituting the three-dimensional framework (base material structure), and SiO₄ was used as another kind of polyhedral-structure molecules constituting the three-dimensional framework (base material structure).

Predetermined amounts of calcium carbonate CaCO₃, aluminum oxide Al₂O₃, cerium oxide CeO₂, terbium oxide Tb₄O₇, and silicon dioxide SiO₂ were weighed so that a composition of Ca_{0.99}Ce_{0.005}Tb_{0.005}Al₂Si₂O₈ was realized. Subsequently, the weighed constitutive materials were sufficiently mixed in an ethanol with a ball mill, and then the mixture was dried at 80°C. The dried mixture was crushed in a triturator, and then the crushed mixture was sintered at 1400°C for four hours in a reduction atmosphere (5 % hydrogen-containing argon). Note that, the temperature was slowly raised or dropped by 2°C per minute. Next, the resultant material after the sintering was pulverized, thereby preparing powder of a stress-stimulated luminescent material. Further, the powdery resultant was subjected to X-ray diffraction (XRD) measurement, ultraviolet-ray-excited photoluminescence (hereinafter, referred to also as "PL") measurement, and a stress-stimulated luminescence (mechanoluminescence: hereinafter, referred to also as "ML") measurement.

Note that, each measurement was carried out (i) under such condition that only the stress-stimulated luminescent material was used and (ii) under such condition that a composite material including the stress-stimulated luminescent material was used.

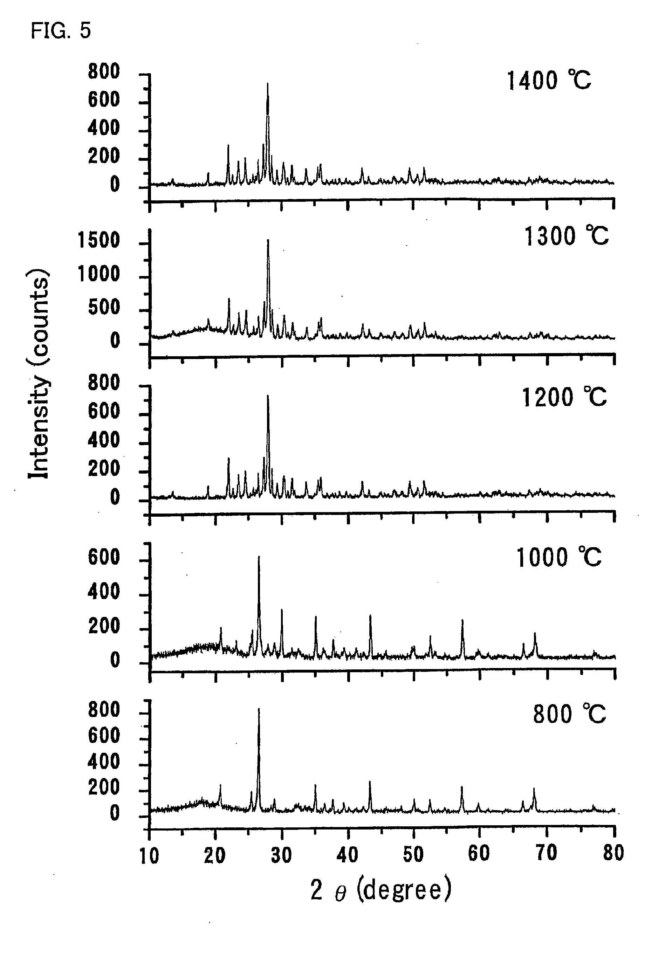

Fig. 5 illustrates XRD patterns under such condition that a sintering temperature was changed. From the diffraction patterns, it became apparent that a triclinic structure belonging to a P-1 space group showing stress-stimulated luminescence appears at 1200°C or higher temperature. Further, the stress-stimulated luminescent material having this structure can be stably manufactured until the temperature attains at least 1500°C. Note that, the temperature was gradually raised and dropped (by 2°C per minute).

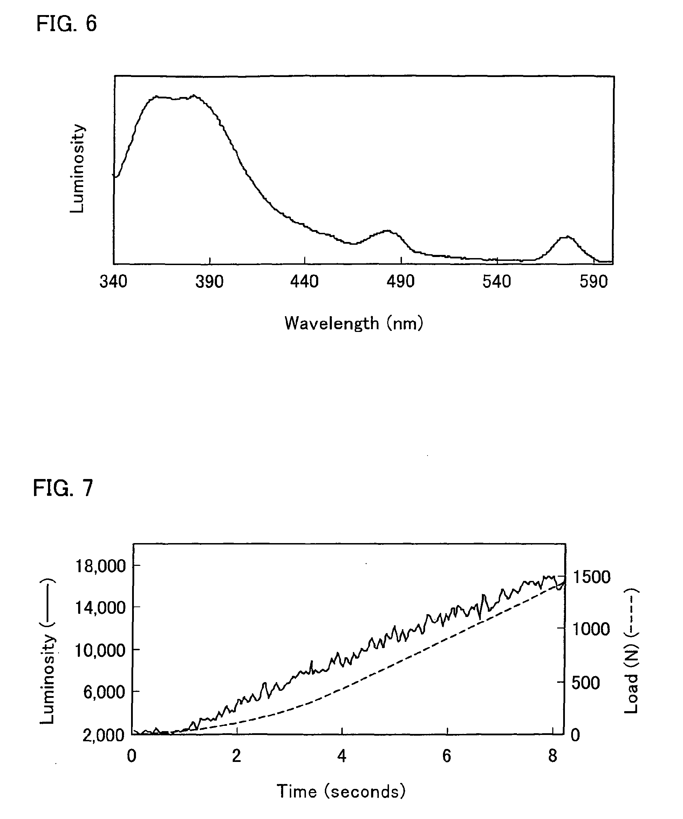

Fig. 6 illustrates a stress-stimulated luminescence spectrum of Ca_{0.99}Ce_{0.005}Tb_{0.005}Al₂Si₂O₈. According to the stress-stimulated luminescence spectrum of Fig. 6, a luminescence peak corresponding to added Ce³⁺ is 380 nm. This shows that Ca_{0.99}Ce_{0.005}Tb_{0.005}Al₂Si₂O₈ emits ultraviolet fluorescent light excited by ultraviolet light. Also in the stress-stimulate luminescence, a similar luminescence spectrum was observed, so that a stress-stimulated luminescent source might be Ce³⁺ of the luminescent center as in the PL (photoluminescence).

Fig. 7 is a graph illustrating how stress-stimulated luminescence of a composite material including Ca_{0.99}Ce_{0.005}Tb_{0.005}Al₂Si₂O₈ changes with time passage. Note that, the luminosity was measured by measuring a luminescent property with a material testing machine while applying a mechanically compressed load of 1500N. As the load changed, also the luminosity changed. That is, as the stress increased, the luminosity of the stress-stimulated luminescence increased.

Note that, when only the stress-stimulated luminescent material (stress-stimulated luminescent ceramics) was used in carrying out the measurement, the luminosity thereof was lower than that of the composite material under such condition that both the materials were the same in the stress and a change rate of the stress. However, both the materials were substantially the same in the luminescence wavelength (luminescence spectrum) and stress-stimulated luminosity's dependency on the stress.

### [Example 2]

A stress-stimulated luminescent material whose basic structure and luminescent center were changed was produced in the same manner as in Example 1 except that constitutive materials of the stress-stimulated luminescent material were changed. Then, ML luminosity of each stress-stimulated luminescent material was measured. Table 1 shows results of the measurement.

**[Table 1]**

| Results of measurement carried out with respect to luminescent materials of Example 2 in view of the ML luminosity and the luminescence wavelength | | |
|---|---|---|
| Sample | ML | Luminescent peak center wavelength (nm) |
| Ca_{0.2}Sr_{0.77}Ce_{0.005}Dy_{0.02}Al₂Si₂O₈ | 50 | 350 |
| Ca_{0.2}Sr_{0.79}Ce_{0.005}Tb_{0.005}Al₂SiO₈ | 1068 | 380 |
| Ca_{0.995}Ce_{0.005}Al₂Si₂O₈ | 10 | 400 |
| Ba_{0.2}Sr_{0.795}Ce_{0.005}Al₂Si₂O₈ | 0 | - |
| Sr_{2.97}Ce_{0.01}Tb_{0.02}Al₂O₆ | 64 | 381.50 |
| Sr_{0.97}Eu_{0.01}Dy_{0.02}Al₈O₁₃ | 2 | 491.50 |
| Sr_{3.97}Ce_{0.01}Tm_{0.02}Al₈O₁₆ | 1 | 381.00 |
| Sr_{0.99}Ce_{0.001}Tb_{0.001}Al₂O₄ | 361 | 366.00 |
| Sr_{0.995}Ce_{0.005}Al₂O₄ | 134 | 382.00 |
| Sr_{0.98}Sn_{0.02}Al₂O₄ | 45 | 349.50 |
| Sr_{0.8}Ba_{0.19}Sn_{0.01}Al₂O₄ | 71 | 349.50 |
| Sr_{0.8}Ba_{0.19}Ce_{0.005}Tb_{0.005}Al₂O₄ | 166 | 385.00 |
| Sr₂MgSi₂O₇:Ce 1%Tb0.2%K1% | 510 | 368.0 |
| CaMgSi₂O₆:Ce0.2%Tb0.2%K1% | 2 | 405.0 |
| Ca₂Al₂SiO₇:Ce0.5% | 49 | 416.5 |
| Sr₂(P_{0.84}, B_{0.16})₂O₇: Ce1% | 2 | 354 |
| Sr₂(P_{0.84}, B_{0.16})₂O₇: Pb10% | 1 | 330 |
| Ba₃(PO₄)₂:Ce1% | 534 | 380 |
| Ba₃(PO₄)₂:Eu1% | 162 | 411 |
| Ca₃(PO₄)₂:Ce0.5% | 0 | 380 |
| BaCaMg(PO₄)₂: Ce0.5% | 0 | 369 |
| BaMg₂(PO₄)₂:Ce0.5% | 0 | 368 |

Table 1 shows a list of measurement results in the ML luminosity of the stress-stimulated luminescent materials having various compositions. When the alkali metal ions and the alkali earth metal ions had a lattice defect in a non-stoicheiometric composition, the sample exhibited high-luminosity stress-stimulated luminescence.

### [Example 3]

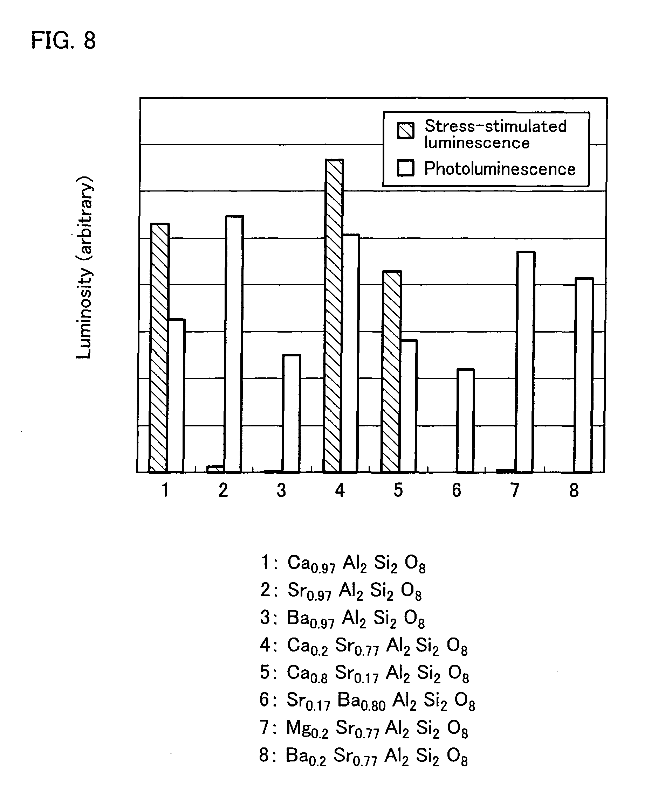

The same operation as in Example 1 was carried out except that constitutive materials of the stress-stimulated luminescent material were changed, thereby manufacturing Ca_{0.97}Q_{0.03}Al₂Si₂O₈, Sr_{0.97}Q_{0.03}Al₂Si₂O₈, Ba_{0.97}Q_{0.03}Al₂Si₂O₈, Ca_{0.2}Sr_{0.77}Q_{0.03}Al₂Si₂O₈, Ca_{0.8}Sr_{0.17}Q_{0.03}Al₂Si₂O₈, Sr_{0.17}Ba_{0.8}Q_{0.03}Al₂Si₂O₈, Mg_{0.2}Sr_{0.77Q0.03}Al₂S₁₂O₈, Ba_{0.2}Sr_{0.77}Q_{0.03}Al₂Si₂O₈. Note that, in the foregoing expressions, Q represents Eu or Ce. As to each of these samples, PL luminosity and ML luminosity were measured. As a result, all the samples showed PL, particularly, samples having Sr showed high PL as shown in Fig. 8. While, it was found that a sample whose PL was high does not necessarily show high ML.

Further, when Ca was substituted by Sr, 80% of the resultant formed a solid solution while keeping a Ca structure (triclinic). While, when exceeding 80%, the resultant had an Sr structure (monoclinic). At a border between the triclinic and the monoclinic, stress-stimulated luminescence was exhibited. However, when excessively exceeding this limit, the stress-stimulated luminosity significantly dropped. For example, as to each of SrSi₂Al₂O₈ and BaAl₂Si₂O₈ which were not triclinic, its stress-stimulated luminosity was low as illustrated in Fig. 8. Further, when Dy and Ho etc. were simultaneously added, the stress-stimulated luminosity increased.

Further, luminescent colors of these stress-stimulated luminescent materials were checked, and it was found that all the stress-stimulated luminescent materials exhibited blue luminescence when Q was Eu, that is, when the luminescent center was Eu. When Q was Ce, that is, when the luminescent center was Ce, blue light was emitted in case where the alkali earth metal was only Ca and ultraviolet light was emitted in case where Ca was partially substituted by Sr.

### [Example 4]

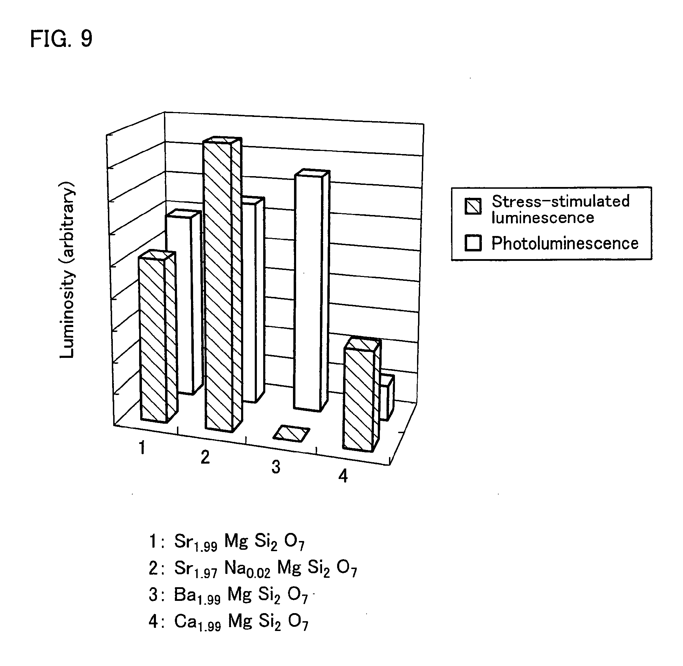

The same operation as in Example 1 was carried out except that constitutive materials of the stress-stimulated luminescent material were changed, thereby manufacturing Sn_{1.99}Q_{0.01}MgSi₂O₇, Sr_{1.97}Na_{0.02}Q_{0.01} MgSi₂O₇, Ba_{1.99}Q_{0.01}MgSi₂O₇, Ca_{1.99}Q_{0.01}MgSi₂O₇. Note that, in the foregoing expressions, Q represents Eu or Ce. As to each of these samples, PL luminosity and ML luminosity were measured. As a result, Sr₂MgSi₂O₇ showed highest ML (see Table 1). Further, when the alkali earth metal was partially substituted by alkali metal, the PL luminosity increased (see Fig. 9).

Further, luminescent colors of these stress-stimulated luminescent materials were checked, and it was found that all the stress-stimulated luminescent materials exhibited blue luminescence when Q was Eu, that is, when the luminescent center was Eu. When Q was Ce, that is, when the luminescent center was Ce, ultraviolet light was emitted. When the luminescent center was Ce, the ML luminosity increased in case where Tb was simultaneously added.

### [Example 5]

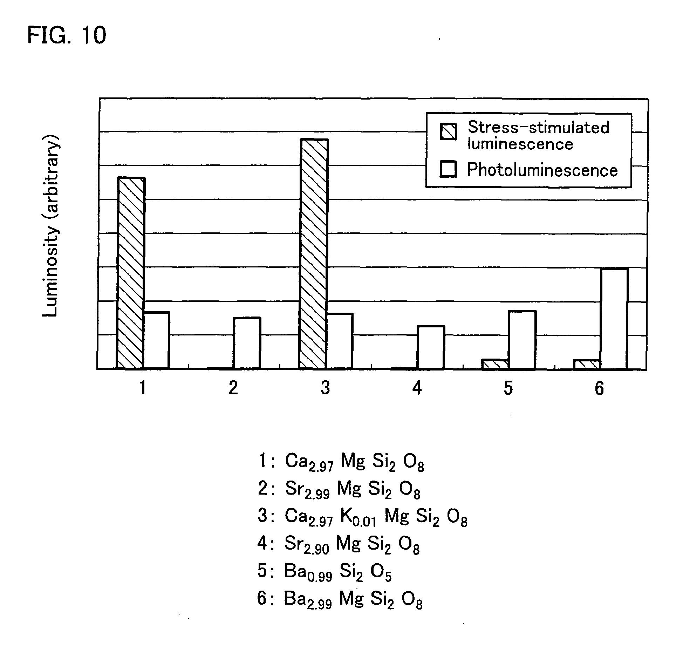

The same operation as in Example 1 was carried out except that constitutive materials of the stress-stimulated luminescent material were changed, thereby manufacturing Ca_{2.97}Q_{0.01}MgSi₂O₈, Sr_{2.99}Q_{0.01}MgSi₂O₈, Ca_{2.97}K_{0.01}Q_{0.01}MgSi₂O₈, Sr_{2.9}Q0.1MgSi₂O₈, Ba_{2.99}Q_{0.01}MgSi₂O₈, and Ba_{0.99}Q_{0.01}Si₂O5. As to each of these samples, PL luminosity and ML luminosity were measured (see Fig. 10). As shown in Fig. 10, PL of Ca₃MgSi₂O₈ was not high, but Ca₃MgSi₂O₈ showed extremely high ML. While, Ba₃MgSi₂O₈ showed extremely high PL but its ML was not high.

Further, luminescent colors of these stress-stimulated luminescent materials were checked, and it was found that all the stress-stimulated luminescent materials exhibited blue luminescence when Q was Eu, that is, when the luminescent center was Eu. When Q was Ce, that is, when the luminescent center was Ce, ultraviolet light was emitted.

### [Example 6]

The same operation as in Example 1 was carried out except that (i) SrCO₃ and SrHPO₄ and (ii) Eu₂O₃ or Ce(NO₃)₃·6H₂O were used as constitutive materials, thereby producing a stress-stimulated luminescent material whose basic structure was an Sr₃(PO₄)₂ structure and luminescent center was Eu or Ce. Note that, sintering conditions were shown in Table 2.

Further, the same operation as in Example 1 was carried out except that (i) BaCO₃ and BaHPO₄ and (ii) Eu₂O₃, Ce(NO₃)₃·6H₂O, or Tl(NO₃)₃ were used as constitutive materials, thereby producing a stress-stimulated luminescent material whose basic structure was a Ba₃(PO₄)₂ structure and luminescent center was Eu, Ce, or Tl. Note that, sintering conditions were shown in Table 2.

Each of the stress-stimulated luminescent materials manufactured in the foregoing manner was subjected to crystal analysis using an X ray and to PL luminosity evaluation. Further, powder of the stress-stimulated luminescent material and an epoxy resin were mixed at a weight ratio of 1 : 1, and the resultant was molded into a rectangle, and then its ML luminosity was evaluated.

**[Table 2]**

| Results of measurement carried out with respect to luminescent materials of Example 6 in view of the ML luminosity, PL luminosity and the luminescence wavelength | | | | |
|---|---|---|---|---|
| Sample | Sintering condition | ML | PL | Luminescent center peak wavelength (nm) |
| Sr_{2.985}Eu_{0.0015}(PO₄)₂ | 1250°C | 1 | 144 | 405 |
| Sr_{2.985}Eu_{0.0015}(PO₄)₂ | 1500°C | 100 | 80 | 405 |
| Sr_{2.985}Ce_{0.0015}(PO₄)₂ | 1500°C | 30 | 97 | 413 |
| Ba_{2.985}Eu_{0.0015s}(PO₄)₂ | 1250°C | 4 | 100 | 413 |
| Sr_{2.985}Ce_{0.005}(PO₄)₂ | 1500°C | 300 | 10 | 350 |
| Sr_{2.985}Ce_{0.0015}(PO₄)₂ | 1250°C | 0 | 12 | 350 |
| Ba_{2.985}Tl_{0.0015}(PO₄)₂ | 1250°C, Air | 20 | 11 | 310 |

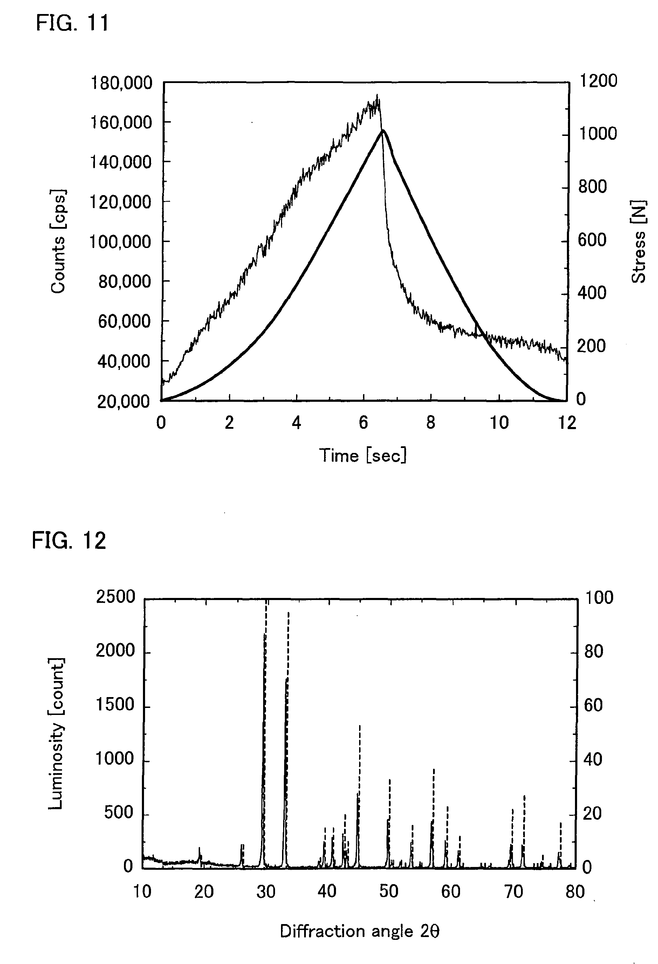

As shown in Table 2, it was found that optimization of the sintering condition allows the Sr₃(PO₄)₂ structure to exhibit high-luminosity bluish-purple luminescence in case where Eu is used as the luminescent center. While, it was found that the stress-stimulated luminescent material exhibits high-luminosity ultraviolet luminescence in case where Ce was used as the luminescent center. Further, as to Sr_{2.985}Ce_{0.015}(PO₄)₂ obtained by sintering at 1500°C, a load changed and also its luminosity changed as illustrated in Fig. 11. That is, with increase of the stress, also the stress-stimulated luminescence increased. Note that, the stress-stimulated luminescence was measured by measuring a luminescent property with a material testing machine while applying a mechanical compressive load of 1500N.

Further, Sr_{2.985}Ce_{0.015}(PO₄)₂ obtained by sintering at 1500°C was subjected to crystal analysis using an X ray. As a result, the crystal structure was a rhombohedron (triclinic) belonging to an R-3 space group as illustrated in Fig. 12.

### [Comparative Example 1]

The same operation as in Example 1 was carried out except that constitutive materials of the stress-stimulated luminescent material were changed, thereby manufacturing Sr₂MgSi₂O₆: Eu 1% Dy 2%, Sr₂MgSi₂O₆: Ce 0.5%, CaMgSi₂O₆: Eu 1%, CaMgSi₂O₆: Eu 1% Dy 2%, and CaMgSi₂O₆: Ce 0.5%. As to each of these samples, PL luminosity, ML luminosity, and a luminescence wavelength were measured. As a result, each sample exhibited blue luminescence as shown in Table 3.

**[Table 3]**

| Results of measurement carried out with respect to luminescent materials of Comparative Example 1 in view of the ML luminosity, PL luminosity and the luminescence wavelength | | | |
|---|---|---|---|
| Sample | ML | PL | Luminescent peak center wavelength (nm) |
| Sr₂MgSi₂O₆:Eu1%Dy2% | 53 | 76.576 | 469.0 |
| Sr₂MgSi₂O₆:Ce0.5% | 6 | 4.500 | 454.0 |
| CaMgSi₂O₆:Eu1% | 1 | 140.239 | 450.0 |
| CaMgSi₂O₆:Eu1%Dy2% | 1 | 76.631 | 449.5 |
| CaMgSi₂O₆:Ce0.5% | 1 | 3.497 | 405.0 |

### [Comparative Example 2]

The same operation as in Example 1 was carried out except that constitutive materials of the stress-stimulated luminescent material were changed, thereby manufacturing Ca₂Al₂SiO₇: Eu 1%, Ca₂Al₂SiO₇: Eu 1% Dy 2%, Ca₂Al₂SiO₇: Ce 0.5%, Sr₂Al₂SiO₇: Eu 1%, Sr₂Al₂SiO₇: Eu 1% Dy 2%, and Sr₂Al₂SiO₇: Ce 0.5%. As to each of these samples, PL luminosity, ML luminosity, and a luminescence wavelength were measured. As a result, each sample exhibited blue luminescence as shown in Table 4.

**[Table 4]**

| Results of measurement carried out with respect to luminescent materials of Comparative Example 2 in view of the ML luminosity, PL luminosity and the luminescence wavelength | | | |
|---|---|---|---|
| Sample | ML | PL | Luminescent peak center wavelength (nm) |
| Ca₂Al₂SiO₇:Eu1% | 59 | 57.04 | 518.5 |
| Ca₂Al₂SiO₇:Eu1%Dy2% | 47 | 74.58 | 519.5 |
| Ca₂Al₂SiO₇:Ce0.5% | 54 | 57.28 | 416.5 |
| Sr₂Al₂SiO₇:Eu1% | 118 | 46.61 | 484.0 |
| Sr₂Al₂SiO₇:Eu1%Dy2% | 23 | 43.92 | 482.0 |
| Sr₂Al₂SiO₇:Ce0.5% | 93 | 54.24 | 407.5 |

The present invention is not limited to the description of the embodiments above, but may be altered by a skilled person within the scope of the claims. An embodiment based on a proper combination of technical means disclosed in different embodiments is encompassed in the technical scope of the present invention.

### INDUSTRIAL APPLICABILITY

The stress-stimulated luminescent material of the present invention exhibits high luminosity, so that the stress-stimulated luminescent material can be used not only as a stress-stimulated luminescent material but also as a luminescent material having various luminescent mechanisms. Further, it is possible to realize high-energy ultraviolet luminescence which has not been conventionally achieved, so that the stress-stimulated luminescent material can be used as a composite material obtained by combining the stress-stimulated luminescent material with other luminescent material.

## Claims

1. A stress-stimulated luminescent material, comprising a basic structure obtained by inserting alkali metal ions and/or alkali earth metal ions into a void of a base material structure made of a plurality of polyhedral-structure molecules, wherein the alkali metal ions and/or the alkali earth metal ions inserted into the void are partially substituted by at least one kind selected from a group made up of rare earth metal ions, transition metal ions, group-III metal ions, and group-IV metal ions.

2. The stress-stimulated luminescent material as set forth in claim 1, wherein the basic structure is self distorted and the polyhedral-structure molecules include at least one of tetrahedral AlO₄, tetrahedral SiO₄, tetrahedral PO₄, and tetrahedral BO₄.

3. The stress-stimulated luminescent material as set forth in claim 1 or 2, wherein the basic structure has a triclinic structure belonging to a P-1 space group.

4. The stress-stimulated luminescent material as set forth in claim 3, wherein the triclinic structure belonging to the P-1 space group is an anorthite-like structure.

5. The stress-stimulated luminescent material as set forth in claim 1 or 2, wherein the basic structure has a carbide structure belonging to a P-42₁m space group.

6. The stress-stimulated luminescent material as set forth in claim 5, wherein the carbide structure belonging to the P-42₁m space group is an akermanite-like structure.

7. The stress-stimulated luminescent material as set forth in claim 1 or 2, wherein the basic structure has a triclinic structure belonging to an R-3 space group.

8. The stress-stimulated luminescent material as set forth in any one of claims 1 to 7, emitting ultraviolet light.

9. The stress-stimulated luminescent material as set forth in any one of claims 1 to 8, wherein the basic structure is represented by any one of the following expressions (1) to (6):
MₓN₁₋ₓAl₂Si₂O₈ ... (1);
XₓY₁₋ₓAlSi₃O₈ ... (2);
(XₓM₁₋ₓ)(SiₓAl₁₋ₓ)AlSi₂O₈ ... (3);
XₓM_{y}Ca_{1-x-y}Al₂₋ₓSi₂₊ₓO₈ ... (4);
MₓN₂₋ₓMgSi₂O₇ ... (5);
and
MₓN₃₋ₓ(PO₄)₂ ... (6),
where each of M and N represents bivalent metal ions, and at least one kind thereof is Ca, Sr, Ba, Mg, or Mn, and each of X and Y represents monovalent metal ions, and at least one kind thereof is Li, Na, or K, and 0 ≤ x ≤ 0.8 and 0 ≤ y ≤ 0.8.

10. The stress-stimulated luminescent material as set forth in any one of claims 1 to 9, wherein a plurality of alkali metal ions whose ion radiuses are different from each other or a plurality of alkali earth metal ions whose ion radiuses are different from each other are inserted into the void of the base material structure.

11. The stress-stimulated luminescent material as set forth in any one of claims 1 to 10, wherein an amount of the rare earth metal, the transition metal, the group-III metal, and the group-IV metal is 0.1 mol % or more and 10 mol % or less.

12. The stress-stimulated luminescent material as set forth in any one of claims 1 to 11, wherein the rare earth metal ions are at least one kind selected from a group made up of Eu, Dy, La, Gd, Ce, Sm, Y, Nd, Tb, Pr, Er, Tm, Yb, Sc, Pm, Ho, and Lu, and the transition metal ions are at least one kind selected from a group made up of Cr, Mn, Fe, Sb, Ti, Zr, V, Co, Ni, Cu, Zn, Nb, Mo, Ta, and W, and the group-III metal ions are at least one kind selected from a group made up of Al, Ga, In, and Tl, and the group-IV metal ions are at least one kind selected from a group made up of Ge, Sn, and Pb.

13. The stress-stimulated luminescent material as set forth in any one of claims 1 to 11, wherein the rare earth metal ions are Ce ions, and the group-III metal ions are Ti ions, and the group-IV metal ions are Sn ions or Pb ions.

14. The stress-stimulated luminescent material as set forth in any one of claims 1 to 13, wherein at least Ce ions are inserted into the void.

15. The stress-stimulated luminescent material as set forth in any one of claims 1 to 14, wherein the stress-stimulated luminescent material is represented by Ca_{1-y}Ce_{y}Al₂Si₂O₈ where 0.001 ≤ y ≤ 0.1.

16. The stress-stimulated luminescent material as set forth in any one of claims 1 to 14, wherein the stress-stimulated luminescent material is represented by Sr_{1-y}Ce_{y}(PO₄)₂ where 0.001 ≤ y ≤ 0.1.

17. A method for manufacturing a stress-stimulated luminescent material, comprising the steps of: forming a basic structure by inserting alkali metal ions and alkali earth metal ions into a void of a base material structure made of a plurality of polyhedral-structure molecules; and partially substituting the alkali metal ions and/or the alkali earth metal ions inserted into the void by at least one kind selected from a group made up of rare earth metal ions, transition metal ions, group-III metal ions, and group-IV metal ions.

18. The method as set forth in claim 17, comprising the step of inserting a plurality of alkali metal ions whose ion radiuses are different from each other or a plurality of alkali earth metal ions whose ion radiuses are different from each other into the void of the base material structure.

19. A stress-stimulated luminant, comprising the stress-stimulated luminescent material as set forth in any one of claims 1 to 16.

20. A luminant, obtained by mixing the stress-stimulated luminescent material as set forth in any one of claims 1 to 16 with a polymer material.

21. A usage of the stress-stimulated luminescent material as set forth in any one of claims 1 to 16, wherein the stress-stimulated luminescent material is dispersed in a first-dimensional manner.

22. A usage of the stress-stimulated luminescent material as set forth in any one of claims 1 to 16, wherein the stress-stimulated luminescent material is distributed in a second-dimensional manner.

23. A usage of the stress-stimulated luminescent material as set forth in any one of claims 1 to 16, wherein the stress-stimulated luminescent material is distributed in a three-dimensional manner.
